Europäisches Patentamt

European Patent Office

Office européen des brevets

(19)

(11) Publication number: **0 206 071**
**A2**

# EUROPEAN PATENT APPLICATION

(12)

(21) Application number: **86107831.9**

(22) Date of filing: **09.06.86**

(51) Int. Cl.⁴: **C 08 G 18/80,** C 08 G 59/18, C 09 D 5/44

(30) Priority: **19.06.85 US 746477**

(43) Date of publication of application: **30.12.86 Bulletin 86/52**

(84) Designated Contracting States: **BE DE FR GB IT NL SE**

(71) Applicant: **PPG INDUSTRIES, INC., One PPG Place, Pittsburgh Pennsylvania 15272 (US)**

(72) Inventor: **Moriarity, Thomas Charles, 2910 Hemlock Drive, Allison Park, Pa. 15101 (US)**
Inventor: **Zwack, Robert Raymond, 1616 Morningside Avenue, Pittsburgh, Pa. 15206 (US)**

(74) Representative: **Sternagel, Hans-Günther, Dr. et al, Patentanwälte Dr. Michael Hann Dr. H.-G. Sternagel Sander Aue 30, D-5060 Bergisch Gladbach 2 (DE)**

(54) Cationic electrodeposition compositions containing furfuryl alcohol blocked polyisocyanate curing agent.

(57) Cationic electrodeposition compositions comprising a cationic resin containing active hydrogens and a furfuryl alcohol blocked polyisocyanate curing agent are disclosed. The compositions have good low temperature curing properties such that they can be cured at temperatures of 275-320°F. (135-160°C) in 20-45 minutes.

EP 0 206 071 A2

## CATIONIC ELECTRODEPOSITION COMPOSITIONS CONTAINING
## FURFURYL ALCOHOL BLOCKED POLYISOCYANATE CURING AGENT

### Background of the Invention

Field of the Invention: The present invention relates to electrodeposition, and more particularly to cationic electrodeposition compositions containing blocked isocyanate curing agents.

Brief Description of the Prior Art: Cationic electrodeposition compositions employing blocked isocyanate curing agents are well known in the art. Such compositions cure well at relatively low temperatures and this is particularly true when the capping agents are lactams, phenols and oximes. Surprisingly, it has been found that furfuryl alcohol blocked polyisocyanates also provide for good low temperature curing in cationic electrodeposition. This is somewhat surprising in that although furfuryl alcohol blocked polyisocyanates are known from U.S. Patent No. 3,509,103 as curing agents in conventional, non-electrodeposition coatings, they are not disclosed as being useful as low temperature curing agents.

### Summary of the Invention

In accordance with the present invention, improved cationic electrodeposition compositions and a method of cationic electrodeposition employing these compositions are disclosed. The cationic electrodeposition compositions comprise a cationic resin and a furfuryl alcohol blocked polyisocyanate curing agent.

### Detailed Description

The cationic electrodeposition compositions which are employed in the practice of the invention contain as essential ingredients a cationic resin and a furfuryl alcohol blocked polyisocyanate.

The cationic resins for use in electrodeposition are well known in the art. Examples of such cationic electrodeposition resins are those which contain active hydrogens and include amine salt group-containing resins which are the acid-solubilized reaction products of polyepoxides and primary or secondary amines such as described in U.S. Patent No. 4,031,050 to Jerabek.

Besides amine salt group-containing resins, quaternary ammonium salt group-containing resins can also be employed. Examples of these resins are those which are formed from reacting an organic polyepoxide with a tertiary amine acid salt. Such resins are described in U.S. Patents Nos. 3,962,165; 3,975,346 and 4,001,156. Examples of other cationic resins are ternary sulfonium salt group-containing resins such as those described in U.S. Patent No. 3,793,278 to DeBona.

Specially modified cationic resins such as those containing primary amine groups formed from reacting the polyepoxides with diketimines containing at least one secondary amine group, for example, the methyl isobutyl diketimine of diethylene triamine can also be used and in fact their use is preferred. Such resins are described in U.S. Patent No. 4,017,438.

Modified resins such as are obtained by chain extending the polyepoxide to increase its molecular weight are also preferred in the practice of the invention. Such materials are described in U.S. Patent No. 4,148,772 in which the polyepoxide is chain extended with a polyester polyol, and in U.S. Patent No. 4,468,307 in which the polyepoxide is chain extended with a particular polyether polyol. Also, chain extension such as disclosed in Canadian Patent 1,179,443 can be used.

The epoxy polymers which are used in preparing the cationic resins are polyepoxides, that is, polymers having a 1,2-epoxy equivalency greater than one, preferably about two or more. Preferred are polyepoxides which are difunctional with regard to epoxy. The preferred polyepoxides are polyglycidyl ethers of cyclic polyols. Particularly preferred are polyglycidyl ethers of polyphenols such as bisphenol A.

Besides the polyglycidyl ethers of polyphenols, epoxy-containing polymers which can be used are acrylic polymers which contain epoxy groups. These polymers are formed by polymerizing an unsaturated epoxy group-containing monomer such as glycidyl acrylate or methacrylate with one or more other polymerizable ethylenically unsaturated monomers. Examples of these polymers are described in U.S. Patent No. 4,001,156, column 3, line 59, to column 5, line 60, the portions of which are hereby incorporated by reference.

Examples of amines which can be used in preparing the polyepoxide-amine reaction products are ammonia, primary, secondary and tertiary amines, and mixtures thereof. The reaction product of the polyepoxides and the amines is at least partially neutralized with an acid to form a polymeric product containing amine salt and/or a quaternary ammonium salt group. Reaction conditions of polyepoxides with amines, examples of various amines and at least partial neutralization with acid are disclosed in U.S. Patent No. 4,260,720, column 5, line 20, to column 7, line 4, the portions of which are hereby incorporated by reference.

With regard to the amount of organic amine and polyepoxide which are reacted with one another, the relative amounts depend on the extent of cationic base such as cationic salt group formation desired and this in turn will depend upon the molecular weight of the polymer. The extent of cationic salt group formation and the molecular weight of the reaction product should be selected such that when the resultant cationic polymer is mixed with aqueous medium, a stable dispersion will form. A stable dispersion is one which does not settle or is one which is easily dispersible if such sedimentation occurs. In some embodiments, the dispersion should additionally be of sufficient cationic character that the dispersed polymer particles will migrate towards the cathode when an electrical potential is impressed between an anode and a cathode immersed in the aqueous dispersion.

Also, the molecular weight, structure and extent of cationic salt group formation should be controlled such that the dispersed polymer will have the required flow to form a film on the substrate; in the case of electrodeposition, to form a film on the cathode. The film should be insensitive to moisture to the extent that it will not redissolve in the electrodeposition bath or be rinsed away from the coated surface after removal from the bath.

In general, most of the cationic polymers useful in the practice of the invention will have molecular weights within the range of 500-100,000 and contain from 0.01 to 10, preferably from about 0.1 to 5.0, preferably from about 0.3 to 3.0 milliequivalents of basic group, for example, cationic group per gram of resin solids. Obviously, one must use the skill in the art to couple the molecular weight with a cationic group content to arrive at a satisfactory polymer. The polyglycidyl ethers will have molecular weights of about 500 to 10,000, preferably 1,000 to 5,000. Acrylic polymers, on the other hand, will have molecular weights as high as 100,000, preferably 5,000 to 50,000.

The active hydrogens associated with the cationic resins of the invention can be selected from any of the active hydrogens which are reactive with isocyanates over a temperature range of 275-325°F. (135-163°C.). Typically, the active hydrogens will be those associated with hydroxyl, primary and secondary amino and thiol including mixed groups such as hydroxyl and primary amino.

The polyisocyanates which are used in preparing the curing agents can be aliphatic or aromatic polyisocyanates with the aromatic polyisocyanates being preferred of lower temperature cure.

Representative examples of aliphatic polyisocyanates are alkylene polyisocyanates, for example, trimethylene, tetramethylene, and hexamethylene diisocyanates; cycloalkylene polyisocyanates such as 1,4-cyclohexane diisocyanate and isophorone diisocyanate.

Examples of aromatic polyisocyanates are the arylene polyisocyanates such as para-phenylene diisocyanate, 4,4'-diphenyl diisocyanate; alkarylene polyisocyanates such as 4,4'-diphenylene methane diisocyanate, 2,4- or 2,6-toluene diisocyanates or mixtures thereof; nuclear substituted aromatic compounds such as dianisidine diisocyanate.

Triisocyanates such as triphenylmethane-4,4',4"-triisocyanate and reaction products of polyisocyanates with polyols such as one mole of trimethylolpropane reacted with three moles of toluene diisocyanate to form predominantly a triisocyanate can also be used.

Also, polymerized polyisocyanates such as toluene diisocyanate dimers and trimers such as polymethylene polyphenylisocyanate can also be used.

Besides polyisocyanates, monoisocyanates such as ethylenically unsaturated monoisocyanates can be used in the preparation of
acrylic polymers. Examples include vinyl isocyanate, allyl
isocyanate, 2-isocyanatoethyl acrylate and 2-isocyanatoethyl methacrylate. These materials can be capped or blocked with furfuryl alcohol
and reacted with other acrylic monomers including glycidyl acrylate or
glycidyl methacrylate to form an epoxy group-containing acrylic
polymer containing capped isocyanate groups. Capping can also occur
after reaction with the other vinyl monomers as long as there are no
ingredients which will adversely react with the isocyanate groups.
This polymer in turn can be reacted with amines, partially neutralized
with acid to form ungelled cationic polymers (resins) containing
capped isocyanate groups which are integral with the ungelled resin.

An organic polyisocyanate can be fully blocked or capped
with a furfuryl alcohol and can be used as one component of a multicomponent composition along with the ungelled cationic resin. Alternately, an organic polyisocyanate can be partially capped, for
example, half-blocked or half-capped with furfuryl alcohol and the
partially capped material reacted with the active hydrogens of the
ungelled cationic resin to form an ungelled cationic resin containing
integral isocyanate groups. Procedures for preparing polyepoxide-
amine reaction products with integral blocked isocyanate curing agents
are shown in U.S. Patent No. 3,947,338. Also, mixtures of fully
blocked and integral isocyanate can be used.

Whether present as a separate component or integral with the
active hydrogen-containing ungelled cationic resin, the capped
polyisocyanate is present in an amount sufficient to impart complete
cure to the composition. Typically, the capped polyisocyanate is
present in an isocyanate:active hydrogen equivalent ratio of 0.05 to
1.5:1, preferably 0.1 to 1.3:1. The equivalents of isocyanate being
that associated with the blocked or capped isocyanate group. The
active hydrogens are those associated with the cationic resin and
other non-volatile active hydrogen-containing materials which may be
present in the composition, for example, as modifying materials.

Besides furfuryl alcohol itself, substituted furfuryl
alcohol in which the substituents are on the ring or on the methylene

- 6 -                                    0206071

group can be used.  Preferably, the substituents will be ring substituted.  The substituents should not adversely affect curing nor stability of the electrodeposition bath.  Examples of suitable substituents include alkyl, aryl, alkaryl, aralkyl and halo.  In addition to furfuryl alcohol and substituted furfuryl alcohol, mixed blocking agents can be used.  Examples include mixtures of furfuryl alcohol with ketoximes, lactams, alcohols and alkoxy substituted alcohols such as methyl ethyl ketoxime, epsilon-caprolactam, methanol, ethanol and 2-ethoxyethanol.

The ungelled cationic resin and blocked isocyanate curing agent is in the form of an aqueous dispersion.  The term "dispersion" is believed to be a two-phase transparent, translucent or opaque resinous system in which the resin is the dispersed phase and the water is the continuous phase.  The average particle diameter of the resinous phase is less than 10 and preferably less than 5 microns.  The concentration of the resinous phase (ungelled cationic resin and capped polyisocyanate curing agent) in the aqueous medium is usually at least about 0.5, usually from about 0.5 to 50 percent by weight based on total weight of the aqueous dispersion.  For use as an electrodeposition bath, concentrations of 5 to 30 percent by weight are typical.

Besides water, the aqueous medium may contain a coalescing agent.  Useful coalescing solvents include hydrocarbons, alcohols, esters, ethers and ketones.  The preferred coalescing solvents include alcohols, polyols and ketones.  Specific coalescing solvents include isopropanol, butanol, 2-ethylhexanol, isophorone, 4-methoxypentanone, ethylene and propylene glycol and the monoethyl, monobutyl and monohexyl ethers of ethylene glycol.  The amount of coalescing solvent is not unduly critical and is generally between about 0.01 and 40 percent, preferably about 0.05 to about 25 percent by weight based on total weight of the aqueous medium.

In some instances, a pigment composition and if desired various additives such as surfactants or wetting agents are included in the dispersion.  Pigment composition may be of the conventional types comprising, for example, iron oxide, lead oxide, strontium chromate, carbon black, titanium dioxide, talc, barium sulfate as well as color pigments such as cadmium yellow, cadmium red, chromium yellow and the like. The pigment content of the dispersion is usually expressed as the pigment-to-resin ratio. In the practice of the present invention, the pigment-to-resin ratio is usually within the range of 0.02 to 1:1. The other additives mentioned above are usually in the dispersion in amounts of about 0.01 to 10 percent by weight based on total weight of resin solids.

A cure catalyst is usually employed in the compositions and examples include organotin compounds such as dibutyltin dilaurate and dibutyltin oxide. The catalyst is usually present in an amount of about 0.1 to 5 percent by weight based on total weight of resin solids.

For use in electrodeposition, the aqueous dispersions are placed in contact with an electrically conductive anode and an electrically conductive cathode with the surface to be coated being the cathode. Following contact with the aqueous dispersion, an adherent film of the coating composition is deposited on the cathode and a sufficient voltage is impressed between the electrodes. The conditions under which the electrodeposition is carried out are, in general, similar to those used in electrodeposition of other types of coatings. The applied voltage may be varied and can be, for example, as low as one volt to as high as several thousand volts, but typically between 50 and 500 volts. The current density is usually between 0.5 ampere and 15 amperes per square foot and tends to decrease during electrodeposition indicating the formation of an insulating film.

The coating compositions of the present invention can be applied to a variety of electroconductive substrates especially metals such as steel, aluminum, copper, magnesium and the like, but also including metallized plastic and conductive carbon-coated materials.

After the coating has been applied by electrocoating, it is cured, usually by baking at elevated temperatures. The compositions of the present invention after being cathodically electrodeposited have been found to cure completely at low temperatures, that is, over the temperature ranges of about 275-325°F. (135-163°C.) in about 20 to 45 minutes. Evidence of cure is seen by the solvent resistance of the cured coating, specifically its resistance to acetone. Cured coatings prepared with the compositions and by the method of the invention can withstand 100 acetone double rubs without rubbing through the coating to the substrate. An acetone double rub is a rub back and forth across the same area of the coating with an acetone-saturated cloth using normal hand pressure.

Illustrating the invention are the following examples which, however, are not to be considered as limiting the invention to their details. All parts and percentages in the examples as well as throughout the specification are by weight unless othewise indicated.

## EXAMPLES

The following examples show a cationic electrodeposition composition comprising an ungelled cationic resin containing active hydrogens and a furfuryl alcohol blocked polyisocyanate curing agent. The composition was electrodeposited on a cathode and cured. For comparative purposes, other cationic electrodeposition compositions containing other alcohol capped polyisocyanates were also evaluated.

### Example I

An ungelled cationic resin containing the furfuryl alcohol blocked polyisocyanate was prepared from the following mixture of ingredients. The equivalent ratio of blocked isocyanate to active hydrogen groups was about 0.32:1.

| Ingredients | Parts by Weight (grams) |
|---|---|
| EPON 828[1] | 682.3 |
| Bisphenol A-ethylene oxide adduct (1/6 molar ratio) | 245.8 |
| Xylene | 59.3 |
| Bisphenol A | 197.8 |
| Benzyldimethylamine | 3.0 |
| Furfuryl alcohol capped polyisocyanate[2] | 864.3 |
| Diketimine derivative[3] | 70.7 |
| N-methylethanolamine | 65.0 |
| 1-Phenoxy-2-propanol | 65.0 |

[1]Epoxy resin solution made from reacting epichlorohydrin and bisphenol A having an epoxy equivalent of about 188 commercially available from Shell Chemical Company.

- 9 -                    0206071

[2]Polyurethane crosslinker formed from half-capping toluene diisocyanate (80/20 2,4-/2,6-isomer mixture) with furfuryl alcohol and reacting this product with trimethylolpropane in a 3:1 molar ratio. The crosslinker is present as about a 68 percent solids solution in methyl isobutyl ketone.

[3]Diketimine derived from diethylenetriamine and methyl isobutyl ketone (73 percent solids in methyl isobutyl ketone).

The EPON 828, bisphenol A-ethylene oxide adduct, xylene and bisphenol A were charged to a reaction vessel and heated together with a nitrogen sparge to 130°C. One (1.0) part by weight of the benzyldimethylamine catalyst was added and the mixture heated to reflux and held for one-half hour at reflux to remove any water. The reaction mixture was cooled to 145°C. followed by the addition of the remaining portion of the benzyldimethylamine and the reaction held at a temperature of about 145°C. until a reduced Gardner-Holdt viscosity (50 percent resin solution in 2-ethoxyethanol) of R was obtained. The polyurethane crosslinker, diketimine derivative and N-methylethanolamine were then added and the temperature of the reaction mixture brought to 125°C. and held at this temperature for about one hour. The 1-phenoxy-2-propanol was then added and 1900 parts of this reaction mixture were dispersed in a mixture of 54.2 grams of 88 percent aqueous lactic acid, 24.1 grams of a cationic surfactant described below and 806.1 grams of deionized water. After further dilution with 2001 grams of deionized water, the solids content of the aqueous dispersion was 32 percent. The dispersion was then vacuum stripped to a solids content of about 39 percent.

The cationic surfactant was prepared by blending 120 parts of alkyl imidazoline commercially available from Geigy Industrial Chemicals as GEIGY AMINE C, 120 parts by weight of an acetylenic alcohol commercially available from Air Products and Chemicals as SURFYNOL 104, 120 parts by weight of 2-butoxyethanol and 19 parts by weight of glacial acetic acid.

### Example II

A composition similar to Example I was prepared with the exception that the blocking agent was 2-ethylhexanol instead of furfuryl alcohol. The equivalent ratio of blocked isocyanate to active hydrogen was the same as Example I.

## Example III

A composition similar to that of Examples I and II above was prepared with the exception that the capping agent was 2-hexoxy-ethanol. The equivalent ratio of blocked isocyanate to active hydrogen was the same as Example I.

### Quaternizing Agent

A quaternizing agent was prepared from the following mixture of ingredients:

| Ingredients | Parts by Weight (grams) | Solids |
|---|---|---|
| 2-Ethylhexanol half capped 2,4-toluene diisocyanate in methyl isobutyl ketone | 320.0 | 304 |
| Dimethylethanolamine | 87.2 | 87.2 |
| Aqueous lactic acid solution | 117.6 | 88.2 |
| 2-Butoxyethanol | 39.2 | – |

The 2-ethylhexanol half-capped toluene diisocyanate was added to the dimethylethanolamine in a suitable reaction vessel at room temperature. The mixture exothermed and was stirred for one hour at 80°C. Lactic acid was then charged followed by the addition of 2-butoxyethanol. The reaction mixture was stirred for about one hour at 65°C. to form the desired quaternizing agent.

### Pigment Grinding Vehicle

A pigment grinding vehicle was prepared from the following charge:

| Ingredients | Parts by Weight (grams) | Solids |
|---|---|---|
| EPON 829[1] | 710 | 682 |
| Bisphenol A | 289.6 | 289.6 |
| 2-Ethylhexanol half-capped 2,4-toluene diisocyanate in methyl isobutyl ketone | 406.4 | 386.1 |
| Quaternizing agent as described above | 496.3 | 421.9 |
| Deionized water | 71.2 | – |
| 2-Butoxyethanol | 1490 | – |

[1]Epoxy resin solution made from reacting epichlorohydrin and bisphenol A having an epoxy equivalent of about 188 commercially available from Shell Chemical Company.

The EPON 829 and bisphenol A were charged under a nitrogen atmosphere to a suitable reaction vessel and heated to 150-160°C. to initiate an exotherm. The reaction mixture was permitted to exotherm for one hour at 150-160°C. The reaction mixture was then cooled to 120°C. and the 2-ethylhexanol half-capped toluene diisocyanate added. The temperature of the reaction mixture was held at 110-120°C. for one hour, followed by the addition of the 2-butoxyethanol. The reaction mixture was then cooled to 85-90°C., homogenized and then charged with water followed by the addition of the quaternizing agent as described above. The temperature of the reaction mixture was held at 80-85°C. until an acid value of about one was obtained. The reaction mixture had a solids content of about 55 percent.

### Catalyst Paste

A dibutyltin oxide catalyst was dispersed in the grinding vehicle as follows:

| Ingredients | Parts by Weight (grams) |
| --- | --- |
| Pigment grinding vehicle prepared as described above | 145 |
| Deionized water | 321.6 |
| Dibutyltin oxide | 200 |

The above ingredients were mixed together and ground to a Hegman No. 7 grind.

### Cationic Coating Compositions

A series of cationic electrodeposition baths were prepared from the cationic resins described above.

### Example IV

| Ingredients | Parts by Weight (grams) | Solids |
| --- | --- | --- |
| Cationic electrodeposition composition of Example I | 1033.6 | 400.0 |
| Deionized water | 966.4 | – |
| Catalyst paste as described above | 25.0 (2% dibutyltin oxide based on resin solids) | |

## Example V

| Ingredients | Parts by Weight (grams) | Solids |
|---|---|---|
| Cationic resin of Example II | 1011.4 | 400.0 |
| Deionized water | 988.6 | - |
| Catalyst paste | 25.0 | |

## Example VI

| Ingredients | Parts by Weight (grams) | Solids |
|---|---|---|
| Cationic electrodeposition resin of Example III | 1081.8 | 400.0 |
| Deionized water | 918.9 | - |
| Catalyst paste | 25.0 | |

Untreated steel panels were cathodically electrodeposited in the baths described above for two minutes at 250 volts at a bath temperature of 77°F. (25°C.). The coated panels were rinsed and then baked for 30 minutes at 300°F. (149°C.).

The coating (0.6 mils) deposited from the cationic electrodeposition bath of Example IV (furfuryl alcohol blocked polyisocyanate) was completely cured in that it withstood 100 acetone double rubs without rubbing through to the substrate.

The coating (0.8 mils) deposited from the electrodeposition bath of Example V (2-ethylhexyl alcohol blocked polyisocyanate) did not cure in that it was completely rubbed through after only five acetone double rubs.

The coating (0.6 mils) deposited from the electrodeposition bath of Example VI was only partially cured in that about 50 acetone double rubs were required to rub through to the metal.

CLAIMS:

1. In an electrodeposition composition comprising a cationic resin and a blocked polyisocyanate curing agent, the improvement comprising the use of furfuryl alcohol or substituted furfuryl alcohol as the blocking agent.

2. The composition of Claim 1 in which the blocking agent is furfuryl alcohol.

3. The composition of Claim 1 in which the blocked polyisocyanate curing agent is present in the composition as a fully blocked polyisocyanate.

4. The composition of Claim 1 in which the blocked polyisocyanate curing agent is integral with the ungelled resin.

5. The composition of Claim 1 in which the equivalent ratio of blocked isocyanate to active hydrogen is from 0.05 to 1.5:1.

6. The composition of Claim 1 in which the cationic resin and blocked polyisocyanate curing agent are dispersed in aqueous medium and are present in amounts of 0.5 to 50 percent by weight based on total weight of the aqueous dispersion.

7. The composition of Claim 1 in which the cationic resin is an at least partially acid-neutralized polyepoxide-amine reaction product.

8. A method of electrocoating an electrically conductive surface serving as a cathode in an electrical circuit comprising said cathode and an anode immersed in an aqueous dispersion of a cationic electrodeposition composition, comprising passing electric current between the anode and the cathode to cause a coating to deposit on the cathode wherein the cationic electrodeposition composition is that of Claim 1.

9. The method of Claim 8 in which the blocking agent is furfuryl alcohol.

10. The method of Claim 8 in which the blocked polyisocyanate curing agent is present as a fully blocked polyisocyanate.

11. The method of Claim 8 in which the equivalent ratio of blocked isocyanate to active hydrogen is from 0.05 to 1.5:1.

- 14 -

0206071

12. The method of Claim 8 in which the ungelled cationic resin and blocked polyisocyanate curing agent are present in amounts of 5 to 30 percent by weight based on total weight of the aqueous dispersion.

13. The method of Claim 8 in which the ungelled cationic resin is an at least partially acid-neutralized polyepoxide-amine reaction product.